# EUROPÄISCHE PATENTSCHRIFT

(11) **EP 0 346 587 B1**
(45) Veröffentlichungstag und Bekanntmachung des Hinweises auf die Patenterteilung: **12.01.1994**
(21) Anmeldenummer: 89106723.3
(22) Anmeldetag: 14.04.1989
(51) Int. Cl.: H02G 3/06

(54) **Kabeldurchführung**
Cable feedthrough
Traversée de câble

(30) Priorität: 15.06.1988 DE 3820378
(43) Veröffentlichungstag der Anmeldung: 20.12.1989
(73) Patentinhaber: WABCO Vermögensverwaltungs-GmbH, D-30432 Hannover (DE)
(72) Erfinder: Singbartl, Günther, D-3000 Hannover 1 (DE)
(74) Vertreter: Schrödter, Manfred, Dipl.-Ing.

(56) Entgegenhaltungen:
- DE-U- 7 105 475
- US-A- 2 590 886

## Beschreibung

Die Erfindung betrifft eine Kabeldurchführung für ein wenigstens ein elektrisches Bauteil enthaltendes Gehäuse, insbesondere für einen Impulsdrehzahlgeber, gemäß dem Oberbegriff des Patentanspruchs 1.

Aus der DE-OS 35 20 288 ist ein Impulsdrehzahlgeber bekannt, der ein zweiteilig ausgebildetes Gehäuse aufweist. Das im wesentlichen topfförmig ausgebildete untere Gehäuseteil besteht aus einem metallischen Werkstoff und das als Verschlußteil zum Verschließen des topfförmigen unteren Gehäuseteiles vorgesehene obere Gehäuseteil, an welchem eine Kabeldurchführung angeordnet ist, ist aus einem Kunststoff gefertigt.

Das in der Zeichnung der erwähnten DE-OS 35 20 288 dargestellte obere Gehäuseteil erstreckt sich zum Teil in das untere Gehäuseteil hinein und ist in diesem Bereich als Träger für einen Polstift, einen Permanentmagneten sowie eine den Polstift umgebende Spule ausgebildet. Die dem Polstift abgewandte Stirnseite des oberen Gehäuseteiles weist eine mittels eines Deckels verschließbare Mulde auf, in welcher sowohl mit der Spule verbundene Stromschienen als auch mit den Stromschienen zu verbindende Leiter eines elektrischen Kabels münden. Das Kabel ist aus dem Gehäuse herausgeführt und dient zur elektrischen Verbindung des als Spule ausgebildeten elektrischen Bauteiles mit einer außerhalb des Gehäuses gelegenen und örtlich von diesem getrennt angeordneten elektrischen Einrichtung.

Wie bereits erwähnt, ist am oberen Gehäuseteil eine Kabeldurchführung für das besagte Kabel angeordnet. Die Kabeldurchführung wird von einem Durchlaß in der Wand des oberen Gehäuseteiles gebildet. An der den Durchlaß begrenzenden Wandung sind sich auf das Kabel zu erstreckende Vorsprünge vorgesehen, die an der Mantelfläche des Kabels nach Art von Widerhaken angreifen und so als Zugentlastung für das Kabel dienen.

Die so ausgebildete Zugentlastung der Kabeldurchführung hat verschiedene Nachteile.

Mit den in der Kabeldurchführung angeformten Vorsprüngen kann, bedingt durch Fertigungstoleranzen, möglicherweise keine ausreichende Klemmwirkung am Kabel erzielt werden, so daß die bei Zugbelastung am Kabel auftretenden Kräfte nicht vom Kabelmantel über die in der Kabeldurchführung angeordneten Vorsprünge auf das Gehäuse sondern auf die Adern des Kabels und das mit diesen verbundene elektrische Bauteil im Gehäuse übertragen werden.

Die einzelnen Adern des Kabels können abreißen oder das elektrische Bauteil im Gehäuse kann beschädigt werden.

Eine aus der DE-U-7 105 475 bekannte Kabeldurchführung besitzt eine Scheibe mit einer exzentrisch angebrachten, zur Durchführung eines Kabels dienenden Bohrung. Die Scheibe ist zwischen einem zur Befestigung an einer von dem Kabel zu durchdringenden Wand dienenden Schraubsockel und einer auf diesen aufschraubbaren Überwurfmutter eingepreßt, in der Weise, daß das Kabel an der Stelle des Durchtritts durch die Scheibe eine zugentlastete Biegung erfährt.

Diese bekannte Einrichtung weist den Nachteil auf, daß beim herstellen der Klemmverbindung zwischen Kabel und Kabeldurchführung Schäden am Kabel auftreten können. Beim Aufschrauben der Überwurfmutter auf den Schraubsockel ist nicht auszuschließen, daß die die exzentrisch angeordnete Durchführung aufweisende Scheibe durch Reibschluß von der Überwurfmutter in eine Drehbewegung versetzt wird, was zu einem Verdrehen oder auch Verdrillen des Kabels und somit zu einem Kabelabriß an den Kontaktstellen zwischen dem Kabel und einem elektrischen Bauteil führen kann.

Aus der US-A-2 590 886 ist eine Kupplung zur Verbindung von zwei elektrischen Bauteilen bekannt, die eine Kabeldurchführung aufweist. Die Kabeldurchführung setzt sich aus zwei eine Baueinheit bildenden Bauteilen zusammen, die mittels einer Gelenkstelle relativ zueinander bewegbar miteinander verbunden sind. In der Wand des einen Bauteiles ist eine Vertiefung vorgesehen, in die sich eine am anderen Bauteil angeordnete Erhöhung hineinerstreckt. Die einander zugewandten Seiten der Erhöhung und der die Vertiefung begrenzenden Wand bilden einen Kanal zur Aufnahme eines Kabels.

Bei einer Verschwenkbewegung der beiden Bauteile in der Weise, daß sich die einander zugewandten Seiten der Bauteile voneinander entfernen, erweitert sich der Kanal, so daß ein Kabel in diesen eingeführt werden kann. Bei einer anschließenden Verschwenkbewegung der beiden Bauteile aufeinander zu, in der Weise, daß sich die einander zugewandten Seiten der Bauteile aufeinander zubewegen, verengt sich der Kanal, so daß das Kabel eingeklemmt wird.

Wird diese als Kabeldurchführung und gleichzeitig als Kontaktträger dienende Baueinheit nach der Aufnahme des Kabels in dieser Position in das Gehäuse der Kupplung eingesetzt, so können sich die einander zugewandten Seiten der beiden Bauteile nicht mehr voneinander entfernen und das Kabel wird durch die von den beiden Bauteilen auf das Kabel ausgeübten Klemmkraft gehalten.

Diese bekannte Einrichtung hat den Nachteil, daß bei der Verschwenkbewegung der beiden Bauteile relativ zueinander das Kabel bei Einleiten des Klemmvorganges von der mit Zähnen versehenen Erhöhung des einen Bauteiles in Richtung seiner Längsachse gegen die die Vertiefung des anderen Bauteiles begrenzende, ebenfalls mit Zähnen versehene Wand verschoben wird, was zum einen zu Beschädigungen am Kabel führen kann und zum anderen eine genaue Positionierung des Kabels zu einem im Gehäuse gelegenen Bauteil fast unmöglich macht.

Der Erfindung liegt die Aufgabe zugrunde, eine Kabeldurchführung der Eingangs erwähnten Art mit einer Zugentlastung zu schaffen, die so ausgebildet ist, daß eine zuverlässige Zugentlastung am Kabel erreicht wird.

Diese Aufgabe wird mit den im Patentanspruch 1 angegebenen Merkmalen gelöst. Weiterbildungen und vorteilhafte Ausgestaltungen der Erfindung sind in den Unteransprüchen angegeben.

Die Erfindung bietet insbesondere den Vorteil, durch die relativ großflächige Abstützung der die Zugentlastung bildenden Teile der Kabeldurchführung an der Wand des topfförmig ausgebildeten Gehäuseteiles eine sichere Zugentlastung für das Kabel zu erhalten. Da die Zugentlastung geteilt ausgebildet ist, lassen sich fertigungsbedingte Toleranzen an der Zugentlastung oder auch an der die Zugentlastung aufnehmenden Öffnung im Gehäuse leicht ausgleichen.
Zum Verschließen des topfförmigen Gehäuseteiles ist kein zusätzliches Bauteil erforderlich, da wenigstens das eine der beiden Teile der Zugentlastung als Verschlußteil für das topfförmige Gehäuseteil ausgebildet ist.

Gemäß einer in den Unteransprüchen angegebenen vorteilhaften Ausgestaltung der Erfindung wird das Kabel mittels eines Vorsprunges an dem einen Teil der Zugentlastung und einer diesem Vorsprung gegenüber an dem jeweils anderen Teil der Zugentlastung vorgesehenen Vertiefung elastisch derart verformt, daß der innerhalb der Zugentlastung gelegene Teil des Kabels eine Kurvenform aufweist. Durch diese Maßnahme wird bei einer Zugbelastung des Kabels eine Relativbewegung zwischen den Adern des Kabels und dem Kabelmantel verringert.

In vorteilhafter Weise ist in der äußeren Mantelfläche des einen Teiles der Zugentlastung eine Vertiefung vorgesehen, in welche ein, z.B. durch Eindrücken, erzeugter Vorsprung der Wand des topfförmigen Gehäuseteiles eingreift, wodurch die gleichzeitig das Verschlußteil für das Gehäuse bildende Zugentlastung in Richtung ihrer Längsachse gegen eine Verschiebebewegung gesichert wird.

Gemäß einer in den Unteransprüchen angegebenen weiteren vorteilhaften Ausgestaltung der Erfindung sind in der Kabeldurchführung ein erster Anschlag und ein als zweiter Anschlag dienender umlaufender Vorsprung für das Kabel vorgesehen, wobei der umlaufende Vorsprung so ausgebildet ist, daß er nach Art eines Widerhakens auf das Kabel einwirkt.
Der erste Anschlag ist im Durchlaß für das Kabel so angeordnet, daß das Kabel mit der Stirnfläche des Kabelmantels an diesem Anschlag anliegt. Der zweite Anschlag ist dem ersten Anschlag gegenüberliegend in der Kabeldurchführung angeordnet und derart ausgebildet, daß er sich in dem Mantel des Kabels eindrückt, wobei dieser zweite Anschlag nur eine Bewegung des Kabels in Richtung auf den ersten Anschlag zuläßt. Das bedeutet, daß nach dem Einführen des Kabels in die Kabeldurchführung das Kabel in Richtung seiner Längsachse fixiert ist. Zusätzlich verhindert der zweite Anschlag nach Art einer Dichtung das Eindringen von Schmutz und Feuchtigkeit in den zum Innenraum des Gehäuses führenden Teil des Durchlasses im Verschlußteil.

Die Zugentlastung weist in vorteilhafter Weise im Bereich des ersten Anschlages ein eine gewölbte Fläche aufweisendes Umlenkteil für die Ader bzw. die Adern des Kabels auf. Dieses Umlenkteil findet Verwendung, wenn das Kabel radial aus dem Gehäuse bzw. aus dem Verschlußteil des Gehäuses herausgeführt wird.

Bei der Ausführung der Kabeldurchführung, die für ein radiales Herausführen des Kabels aus dem Gehäuse vorgesehen ist, weist die Kabeldurchführung gemäß einer vorteilhaften Weiterbildung der Erfindung einen an dem einen Teil des Verschlußteiles angeordneten, im wesentlichen quer zur Längsachse des Verschlußteiles und somit auch im wesentlichen quer zur Längsachse des topfförmigen Gehäuseteiles verlaufenden Vorsprung mit einem Durchlaß für das Kabel auf, welcher an den im Verschlußteil vorgesehenen Durchlaß für das Kabel anschließt.
Der im Vorsprung vorgesehene Durchlaß dient als Führung für das Kabel. Der den Vorsprung durchdringende Durchlaß erweitert sich in seinem nach außen führenden freien Endbereich trichterförmig, so daß das Kabel verschwenkt werden kann ohne daß Beschädigungen am Kabel zu befürchten sind.

Ein derartiger Fortsatz kann selbstverständlich auch an einem Verschlußteil für das topfförmige Gehäuseteil vorgesehen werden, bei welchem das Kabel im wesentlichen in Richtung der Längsachse des Gehäuses verlaufend aus dem Gehäuse herausgeführt wird.

Die Wand des topfförmig ausgebildeten Gehäuseteiles weist in vorteilhafter Weise einen Schlitz auf, der sich in Richtung auf den freien Randbereich des topfförmigen Gehäuseteiles zu erstreckt.
Der Schlitz dient zur Aufnahme des am Verschlußteil angeordneten, quer zur Längsachse des Gehäuses verlaufenden Vorsprunges.
Der Schlitz ist so bemessen, daß er sich in Richtung der Längsachse des Verschlußteiles gesehen über den überwiegenden Teil der axialen Erstreckung des Verschlußteiles erstreckt, wobei er den Vorsprung, bezogen auf dessen größten Durchmesser, vollständig aufnimmt. Der Schlitz hat unter anderem die Funktion einer Verdrehsicherung für das Verschlußteil gegenüber dem topfförmigen Gehäuseteil.

Das Verschlußteil weist auf seiner dem topfförmigen Gehäuseteil abgewandten Seite einen sich radial nach außen erstreckenden ringförmigen Vorsprung auf, welcher vorzugsweise nach Art eines Deckels auf dem freien Randbereich des topfförmigen Teiles des Gehäuses aufliegt.

Bei der Verwendung einer mit einer derartigen Zugentlastung ausgestatteten Kabeldurchführung stellt sich häufig auch die Aufgabe einem Abdichtung.

Weiterbildungen der vorliegenden Erfindung ermöglichen es, daß auf einfache Weise auch eine gute Abdichtung des das elektrische Bauteil enthaltenen Innenraumes des Gehäuses erreicht werden kann.

Vorteilhafte Lösungsmöglichkeiten sind in den Unteransprüchen angegeben.

Zur Abdichtung des ein elektrisches Bauteil enthaltenen Raumes im Gehäuse ist eine Dichtungseinrichtung vorgesehen, die wenigstens ein aus einem Elastomer bestehendes Dichtelement aufweist, welches so ausgebildet ist, daß es einerseits an der Wandung des Gehäuses oder an der Wandung eines im Gehäuse angeordneten Teiles und andererseits direkt an der Ader oder bei einem mehradrigen Kabel an den Adern des Kabels dichtend anliegt.

Gemäß einer vorteilhaften Ausgestaltung der Erfindung ist als Abstützung oder auch als Träger für das Dichtelement ein mit dem Verschlußteil verbundener Träger vorgesehen, der auf der dem Innenraum des Gehäuses zugewandten Seite des Verschlußteiles angeordnet ist.
Vorzugsweise ist der Träger als ein ringförmiger Körper ausgebildet, der ein erstes scheibenförmiges Dichtelement und ein zweites ringförmiges Dichtelement trägt. Das erste Dichtelement ist innerhalb des vom ringförmigen Körper begrenzten Raumes angeordnet und liegt einerseits mit seiner Umfangsfläche oder mit an seiner Umfangsfläche angeordneten umlaufenden Dichtungsvorsprüngen an der inneren Mantelfläche des ringförmigen Körpers an und weist andererseits in Richtung seiner Längsachse verlaufend ein oder mehrere Durchlässe für ein oder mehrere Adern des Kabels auf, wobei jeder Durchlaß so ausgebildet und so angeordnet ist, daß jede einen Durchlaß begrenzende Wandung dichtend an eine Ader des Kabels anliegt.
Das zweite Dichtelement liegt mit seiner Innenseite dichtend an der äußeren Mantelfläche des ringförmigen Körpers und mit seiner Außenseite dichtend an der Innenseite des topfförmigen Gehäuses an.

Der als Träger für die Dichtelemente dienende ringförmige Körper kann mit dem Verschlußteil als ein ringförmiger Fortsatz des Verschlußteiles ausgebildet sein und so mit diesem eine einstückige Baueinheit bilden.

Es ist natürlich auch möglich, ausschließlich ein scheibenförmiges Dichtelement vorzusehen, welches die beschriebene Dichtfunktion an der Ader oder den Adern des Kabels und an der Gehäuseinnenwand erfüllt. In einem solchen Fall ist am Verschlußteil eine Abstützung mit einer ebenen Fläche vorgesehen, an welcher das scheibenförmige Dichtelement anliegt.

Die Anordnung eines derart ausgebildeten und derart angeordneten Dichtelementes hat im Zusammenwirken mit der verwendeten Zugentlastung für das Kabel den Vorteil, eine Kabeldurchführung zu erhalten, die einerseits eine sichere Zugentlastung des Kabels und andererseits eine zuverlässige Abdichtung des das elektrische Bauteil enthaltenen Raumes gewährleistet. Die Dichtwirkung des Dichtelementes wird auch bei einer Deformation des Kabels durch Zugbelastung nicht beeinträchtigt, da die Abdichtung direkt an den Adern des Kabels erfolgt.

Anhand der Zeichnung wird nachstehend ein Ausführungsbeispiel der Erfindung näher erläutert.

Es zeigen:
- **Fig. 1**: einen Impulsdrehzahlgeber mit einer Kabeldurchführung, die eine aus zwei Bauteilen bestehende Zugentlastung für das Kabel und eine an den Adern des Kabels und an der Gehäusewand dichtend anliegende Dichtungseinrichtung aufweist, wobei das eine Bauteil als Verschlußteil für das topfförmige ausgebildete Gehäuseteil des Gehäuses des Impulsdrehzahlgebers ausgebildet ist;
- **Fig. 2**: die Zugentlastung gemäß Fig. 1 im Schnitt X und
- **Fig. 3**: das den Schlitz zur Aufnahme des Vorsprunges des Verschlußteiles aufweisenden Bereich des topfförmig ausgebildeten Gehäuseteiles, Ansicht Y.

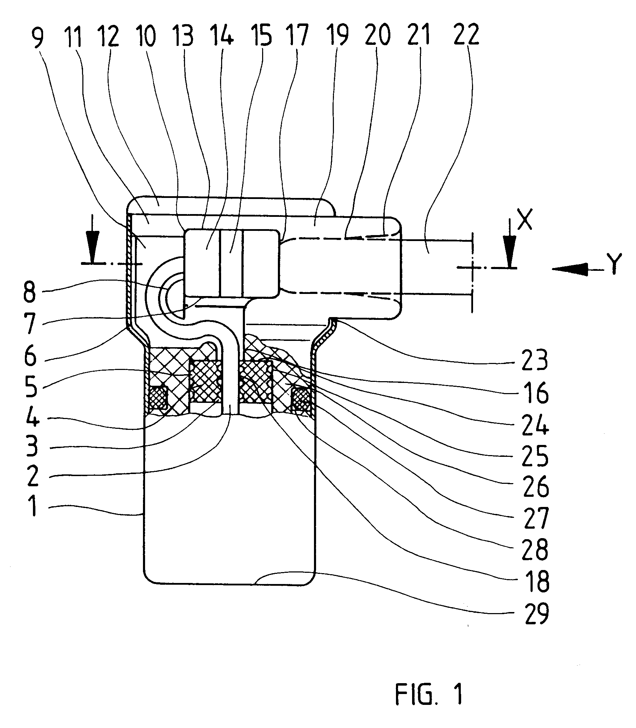

Fig. 1 zeigt ein mit einer Kabeldurchführung versehenes Gehäuse, in welchem eine nicht dargestellte Magnetspule, ein Polstift und ein Permanentmagnet angeordnet sind.

Das Gehäuse besteht aus einem topfförmig ausgebildeten Gehäuseteil (1, 6), welches zu seiner offenen Seite hin einen erweiterten Bereich (6) aufweist, und einem Verschlußteil (11, 12).

Die Kabeldurchführung dient zur Aufnahme eines elektrischen Kabels (2, 22), welches aus wenigstens einer Ader (2) und einem die Ader (2) umgebenden Mantel (22) besteht.
Das elektrische Kabel (2, 22) dient zur Verbindung eines im Gehäuseinnenraum angeordneten elektrischen Bauteiles, wie z.B. der Spule, mit einer außerhalb des Gehäuses (1, 6, 11, 12) gelegenen elektrischen Einrichtung.

Um bei Zugbelastung am Kabel Schäden an der Ader oder den Adern des Kabels (2, 22) oder auch an den mit dem Kabel (2, 22) verbundenen Bauteilen im Gehäuse (1, 6, 11, 12) zu verhindern, ist eine Zugentlastung für das Kabel (2, 22) vorgesehen.

Die Zugentlastung setzt sich im wesentlichen aus zwei gegeneinander bewegbaren Teilen (11 und 14) zum Einklemmen des Kabels (2, 22) zusammen.
Das eine Teil (11) der Zugentlastung ist im wesentlichen als ein zylindrischer Körper ausgebildet, der mit dem überwiegenden Teil seiner axialen Erstreckung in den erweiterten Bereich (6) des topfförmigen Gehäuseteiles (1, 6) eingeschoben ist. Der aus dem Gehäuseteil (1, 6) herausragende Teil (12) des als Verschlußteil ausgebildeten Teiles (11, 12) der Zugentlastung ist in seinem Durchmesser so bemessen, daß er auf dem Randbereich der Montageöffnung des Gehäuseteiles (1, 6) aufliegt und seine Umfangsfläche bündig mit der äußeren Mantelfläche des erweiterten Bereiches (6) des Gehäuseteiles (1, 6) abschließt.

Das als Verschlußteil dienende Teil (11, 12) der Zugentlastung weist einen Vorsprung (19) auf, der im wesentlichen quer zur Längsachse des Verschlußteiles (11, 12) und somit auch im wesentlichen quer zur Längsachse des Gehäuseteiles (1, 6) verlaufend an der Mantelfläche des Verschlußteiles (11, 12) angeformt ist.
In dem als Verschlußteil dienenden Teil (11, 12) der Zugentlastung ist ein Durchlaß (9) für das Kabel (2, 22) vorgesehen. Der Durchlaß (9) ist im wesentlichen quer zur Längsachse des Verschlußteiles (11, 12) angeordnet. Der Durchlaß (9) wird zum Teil von einer quer zur Längsachse des Verschlußteiles (11, 12) verlaufenden stegartigen Wand (7) begrenzt, welche an ihrem freien Ende ein eine nach außen gewölbte Fläche aufweisendes Umlenkteil (8) besitzt.

An den Durchlaß (9) schließt ein im Vorsprung (19) angeordneter weiterer Durchlaß (20) für das Kabel (2, 22) an, der gleichachsig mit dem im Verschlußteil (11, 12) vorgesehenen Durchlaß (9) verläuft.
Der im Vorsprung (19) vorgesehene Durchlaß (20) und der an diesen anschließende Durchlaß (9) im Verschlußteil (11, 12) dienen zur Aufnahme des den Mantel (22) aufweisenden Teiles des Kabels (2, 22).

Im Verschlußteil (11, 12) ist eine quer zur Längsachse des Durchlasses (9) verlaufende Ausnehmung (13) angeordnet, die sich im wesentlichen von der äußeren Mantelfläche des Verschlußteiles (11, 12) bis zum Durchlaß (9) hin ersteckt und in diesem mündet.

In dieser Ausnehmung (13) ist ein als Klemmstück (14) ausgebildetes Teil in Richtung auf das Kabel (2, 22) zu bzw. von diesem weg bewegbar angeordnet. Das Verschlußteil (11, 12) und das Klemmstück (14) bilden zusammen die Zugentlastung für das Kabel (2, 22).
Das Klemmstück (14) ist in Richtung seiner sich auf das Kabel (2, 22) (Kabelmantel 22) zu erstreckenden Längsachse so bemessen, daß es sich nach dem Einsetzen des mit dem Klemmstück (14) versehenen Verschlußteiles (11, 12) in das topfförmige Gehäuseteil (1, 6) mit seinem dem Kabel (2, 22) abgewandten Ende, welches in diesem Ausführungsbeispiel einen sich nach außen ersteckenden Vorsprung (15) aufweist, an der Innenwand des Gehäuseteiles (6) abstützt und mit seiner dem Kabel (2, 22) zugewandten Seite unter elastischer Verformung des Kabels (2, 22) dieses gegen einen Teilbereich der den Durchlaß (9) für das Kabel (2, 22) begrenzenden Wandung oder gegen ein mit dieser Wandung verbundenes Teil, welches hier nicht dargestellt ist, drückt. Die beiden Teile (11, 12 und 14) der Zugentlastung (11, 12, 14) stützen sich so unter Vorspannung im wesentlichen senkrecht zu der Wand des topfförmigen Gehäuseteiles (1, 6) an der Wand des topfförmigen Gehäuseteiles (1, 6) ab.

Die Ausnehmung (13) für das Klemmstück (14) ist in Richtung der Längsachse des Verschlußteiles (11, 12) gesehen so angeordnet, daß sie nach dem Einsetzen des Verschlußteiles (11, 12) mit dem Klemmstück in das Gehäuseteil (1, 6) in dem von dem Gehäuseteil (1, 6) umgebenen Bereich (11) des Verschlußteiles (11, 12) liegt.

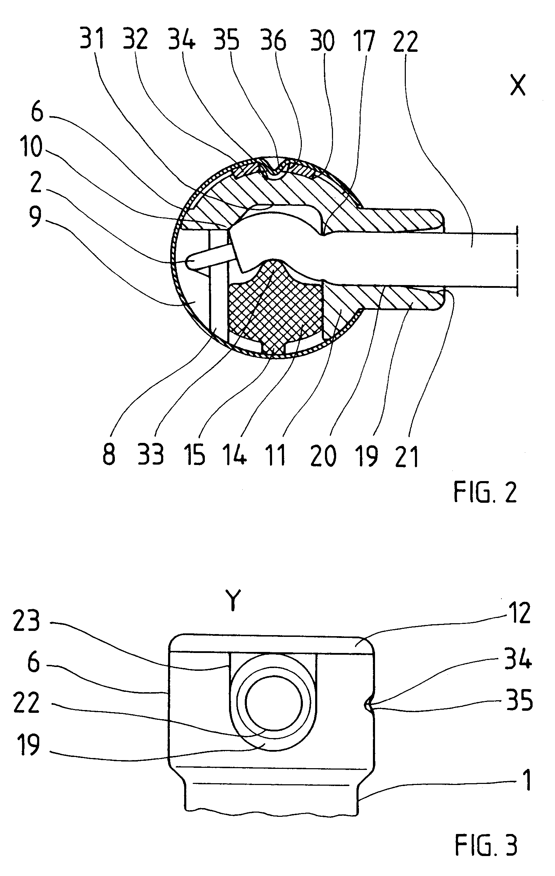

Zur Aufnahme des am Verschlußteil angeordneten, sich radial nach außen erstreckenden Vorsprunges (19) ist in der Wand des topfförmigen Gehäuseteiles (1, 6) ein U-förmig ausgebildeter Schlitz (23) angeordnet, wie aus Fig. 3 ersichtlich ist. Der Schlitz (23) ist in Richtung der Längsachse des topfförmigen Gehäuseteiles (1, 6) verlaufend so angeordnet und so bemessen, daß er sich über den überwiegenden Teil der axialen Erstreckung des Verschlußteiles (11, 12) erstreckt und zu dem zum deckelartigen Teil (12) des Verschlußteiles (11, 12) hin weisenden Rand des topfförmigen Gehäuseteiles hin offen ist.
Der Schlitz (23) und der Vorsprung (19) haben unter anderem die Funktion einer Verdrehsicherung für das Verschlußteil (11, 12) gegenüber dem topfförmigen Gehäuseteil (1, 6).

Der Durchlaß (9) für das Kabel (2, 22) weist einen ersten Anschlag für die Stirnfläche des Mantels (22) des Kabels (2, 22) auf. Der Anschlag setzt sich in diesem Ausführungsbeispiel aus einer Abstufung (10) und einer der Stirnfläche des Mantels (22) des Kabels (2, 22) zugewandten Fläche des Umlenkteiles (8) zusammen. Der Anschlag (10, 8) ist auf der Seite des Durchlasses (9) angeordnet, die dem aus dem Verschlußteil (11, 12) herausführenden freien Ende des Durchlasses (9) gegenüberliegt. Als Anschlag reicht bei Weglassen des Umlenkteiles (8) die Abstufung (10) aus.

Auf der dem ersten Anschlag gegenüberliegenden Seite ist an der den Durchlaß (9) begrenzenden Wand ein sich auf den Mantel (22) des Kabels (2, 22) zu erstreckender, als zweiter Anschlag dienender, umlaufender Vorsprung (17) vorgesehen. Der umlaufende Vorsprung (17) ist so ausgebildet, daß er ein Einführen des Kabels (2, 22) in den Durchlaß (9) in Richtung auf den ersten Anschlag (10) zu erlaubt, eine Bewegung des Kabels (2, 22) vom ersten Anschlag (10) weg jedoch verhindert (Widerhakenprinzip).
Durch diese Anordnung des Anschlages (10) und des zusätzlich die Funktion einer Dichtung erfüllenden umlaufenden Vorsprunges (17) wird das Kabel (2, 22) in Richtung seiner Längsachse fixiert. Wie aus Fig. 2 ersichtlich, ist auf der der Ausnehmung (13) zur Aufnahme des Klemmstückes (14) gegenüberliegenden Seite in der den Durchlaß (9) begrenzenden Wand eine Vertiefung (31) vorgesehen, in welche das Kabel (2, 22) mittels des Klemmstückes (14) hineingedrückt wird, so daß es in diesem Bereich einen kurvenförmigen Verlauf im Durchlaß (9) nimmt.
Um die kurvenförmige Verformung des Kabels (2, 22) zu verstärken, ist auf der dem Kabel (2, 22) zugewandten Seite des Klemmstückes (14) ein sich auf das Kabel (2, 22) zu erstreckender Vorsprung (33) vorgesehen, dessen Berührungsfläche mit dem Mantel des Kabels eine Kontur aufweist, die der Mantelfläche des Kabels (2, 22) angepaßt ist.

Der in dem radial am Verschlußteil (11, 12) angeordneten Vorsprung (19) vorgesehene Durchlaß (20) für das Kabel (2, 22) dient als Führung für das Kabel (2, 22) und ist in seinem freien Endbereich sich nach außen erweiternd nach Art eines Trichters (21) ausgebildet, so daß eine leichte Verschwenkbewegung des Kabels (2, 22) ermöglicht wird, ohne das Kabel zu beschädigen.

Auf der dem Gehäuseinnenraum des topfförmigen Gehäuseteiles (1, 6) zugewandten Seite des Verschlußteiles (11, 12) ist ein Träger (26) für eine Dichtungseinrichtung vorgesehen. Der Träger (26) bildet mit dem Verschlußteil (11, 12) eine einstückige Baueinheit. Die Dichtungseinrichtung dient zur Abdichtung des Innenraumes des Gehäuses gegenüber dem Durchlaß (9) für das Kabel (2, 22) sowie gegenüber der Montageöffnung im topfförmig ausgebildeten Gehäuseteil (1, 6) für das Verschlußteil (11, 12).

Die Dichtungseinrichtung setzt sich aus einem ersten Dichtelement und einem zweiten Dichtelement zusammen, die sich am Träger abstützen bzw. in oder auf diesem gelagert sind.
Das erste Dichtelement ist als eine scheibenförmige Dichtung (4) ausgebildet und in einer in dem den größeren Durchmesser aufweisenden Teil einer abgestuften Ausnehmung (16, 25) des gleichzeitig einen Teilbereich des Verschlußteiles (11, 12) darstellenden Trägers (26) gelagert. Die scheibenförmige Dichtung (4) weist einen Durchlaß (18) für die Ader (2) des Kabels (2, 22) oder auch bei einem mehradrigen Kabel für jede Ader des Kabels einen separaten Durchlaß auf. Der Durchlaß (18) für die Ader ist so ausgebildet, daß die den Durchlaß (18) begrenzende Wand oder an dieser Wand angeordnete umlaufende Vorsprünge (3) dichtend an der Ader (2) anliegen. Mit seiner Umfangsfläche oder mit an dieser Umfangsfläche angeordneten umlaufenden Vorsprüngen (5) liegt die scheibenförmige Dichtung (4) dichtend an der die Ausnehmung (25) des Trägers (26) begrenzenden Wandung an.

In der äußeren Mantelfläche des Trägers (26) ist eine umlaufende Nut (28) vorgesehen, in welcher ein als zweites Dichtelement dienender Dichtring (27) angeordnet ist. Der Dichtring (27) liegt mit seiner Innenseite dichtend am Träger (26) (in der Nut 28) und mit seiner Außenseite dichtend an der Innenwand des topfförmigen Gehäuseteiles (1,6) an.

Die als Aderabdichtung ausgebildete erste Dichtung (4) dichtet so den Innenraum des topfförmigen Gehäuseteiles (1, 6) gegen den Durchlaß (9) für das Kabel (2, 22) und gegen die in der Zugentlastung (11, 12, 13, 14) befindlichen Hohlräume ab.

Der als zweites Dichtelement dienende Dichtring (27) dichtet einen möglichen Spalt zwischen der Innenwand des topfförmigen Gehäuseteiles (1, 6) und der gleichzeitig das Verschlußteil (11, 12) für dieses Gehäuseteil (1, 6) darstellenden Zugentlastung ab.

Der Träger für die Dichtelemente kann, wie vorstehend erwähnt, mit dem Verschlußteil als eine einstückige Baueinheit ausgebildet sein, er kann aber auch als ein separates Teil ausgebildet und im Gehäuse (1, 6) derart angeordnet sein, daß er zwischen dem Verschlußteil und dem das elektrische Bauteil aufweisenden Bereich des Gehäuseinnenraumes gelegen ist. Der Träger bzw. die Abstützung für das Dichtelement oder für die Dichtelemente kann einen kreisförmigen Querschnitt oder auch einen von der Kreisform abweichenden Querschnitt aufweisen, der vorzugsweise der Querschnittsform des Gehäuses (1, 6) angepaßt ist.

Das mit dem Verschlußteil (11, 12) zusammenwirkende Klemmstück (14) kann jede beliebige Form aufweisen. Die im Verschlußteil (11, 12) vorgesehene, zur Aufnahme des Klemmstückes (14) dienende Ausnehmung muß stets so ausgebildet und so bemessen sein, daß das Klemmstück (14) in dieser Ausnehmung sicher geführt wird. Auf die am Klemmstück (14) vorgesehenen Vorsprünge (33 und 15) kann verzichtet werden. Es muß jedoch sichergestellt sein, daß das Klemmstück (14) in Richtung seiner sich auf das Kabel (22, 2) zu erstreckenden Achse so bemessen ist, daß es bei montierter Zugentlastung im Gehäuse sich so weit in den Durchlaß (9) für das Kabel (2, 22) hineinerstreckt, daß das Kabel (2, 22) vom Klemmstück (14) und der dem Klemmstück (14) gegenüberliegenden Wand der Ausnehmung des als Verschlußteil dienenden Teiles (11, 12) der Zugentlastung sicher gehalten wird.

Zur Fixierung des Verschlußteiles (11, 12) im Gehäuse (1, 6) ist in der äußeren Mantelfläche des Verschlußteiles (11, 12) eine Vertiefung (34) vorgesehen, in welche ein durch Prägen oder Eindrücken erzeugter nasenartiger Vorsprung (35) der Gehäusewand eingreift (siehe Fig. 2 und Fig. 3). In diesem Bereich des Gehäuses (1, 6) und des Verschlußteiles (11, 12) ist eine mit einer Ausnehmung (36) versehene Platte (32) vorgesehen, die in einer Vertiefung (30) der Mantelfläche des Verschlußteiles (11, 12) gelagert ist. Der nasenartige Vorsprung (35) erstreckt sich durch die Ausnehmung (36) der Platte (32) hindurch. Die Platte (32) dient zur Versteifung des den nasenartigen Vorsprung (35) aufnehmenden Bereiches des Verschlußteiles (11, 12) und verhindert zusätzlich ein Verformen der Gehäusewand in dem den nasenartigen Vorsprung (35) aufweisenden Bereich beim Prägevorgang.

Die Kabeldurchführung kann selbstverständlich auch so ausgebildet sein, daß das Kabel (2, 22) in Richtung der Längsachse des Gehäuses (1, 6) und des Verschlußteiles (11, 12) verlaufend aus dem Gehäuse (1, 6) herausgeführt wird. Bei einer solchen Ausführungsform der Kabeldurchführung bzw. der Zugentlastung kann auf das Umlenkteil (8) für die Adern (2) des Kabels (2, 22) verzichtet werden.

Die Montage der Kabeldurchführung erfolgt wie nachstehend beschrieben.

Das Kabel (2, 22) wird durch den Durchlaß (20) des Vorsprungs (19) und durch den Durchlaß (9) des Verschlußteiles (11, 12) in das Verschlußteil (11, 12) eingeführt, und zwar so weit, bis die Stirnfläche des Kabelmantels (22) an dem als Anschlag (10) dienenden Vorsprung zur Anlage kommt. Dann werden die Adern (2) des Kabels (2, 22) um das Umlenkteil (8) herumgelegt und durch die abgestufte Ausnehmung (16, 25, 24) des Trägers (26) für die Dichtelemente (4 und 27) hindurchgeführt.
Anschließend wird das als Aderabdichtung ausgebildete erste Dichtelement (4) auf die Ader (2) bzw. auf die Adern (2) des Kabels (2, 22) soweit aufgeschoben, bis das erste Dichtelement (4) in die abgestufte Ausnehmung (16, 25, 24) des Trägers (26) eingetaucht ist und mit seiner dem Verschlußteil (11, 12) zugewandten Stirnfläche an der Fläche (24) der abgestuften Ausnehmung (16, 25, 24) zur Anlage kommt.

In einem vorangegangenen Arbeitsgang ist das als Dichtring ausgebildete zweite Dichtelement (27) in die Nut (28) in der äußeren Mantelfläche des Trägers (26) eingesetzt worden.

Nach Abschluß dieser Arbeitsgänge wird das Klemmstück (14) in die Ausnehmung (13) des Verschlußteiles (11, 12) eingesetzt und soweit in dieses eingedrückt, bis der Vorsprung (15) des Klemmstückes (14) in etwa bündig mit dem benachbarten Bereich der Mantelfläche des Verschlußteiles (11, 12) abschließt.
Dann wird das Verschlußteil (11, 12) mit dem Klemmstück (14) in Richtung auf den Boden (29) des Gehäuses zu in das in das Gehäuse (1, 6) eingeschoben. Dabei setzt das deckelartige Teil (12) des Verschlußteiles (11, 12) auf den Rand des Gehäuses (1, 6) auf.

Anschließend wird durch Eindrücken, Prägen oder einen ähnlichen Vorgang der nasenartige Vorsprung (35) der Gehäusewand erzeugt, welcher in die Ausnehmung (34) in der Mantelfläche des Verschlußteiles (11, 12) eingreift.

Den beiden zuletzt genannten Arbeitsgängen geht die Verbindung der Ader (2) bzw. der Adern (2) mit dem in das Gehäuse (1, 6) mit einzubringenden elektrischen Bauteil voraus.

## Patentansprüche

1. Kabeldurchführung für ein wenigstens ein elektrisches Bauteil enthaltendes Gehäuse, insbesondere für einen Impulsdrehzahlgeber, mit folgenden Merkmalen:
a) Das Gehäuse besteht aus einem topfförmig ausgebildeten Gehäuseteil (1, 6) und einem Verschlußteil (11, 12) zum Verschließen des topfförmigen Gehäuseteiles (1, 6);
b) zur Verbindung des im Gehäuse (1, 6, 11, 12) gelegenen elektrischen Bauteiles mit einer außerhalb des Gehäuses (1, 6, 11, 12) gelegenen elektrischen Einrichtung dient ein elektrisches Kabel (2, 22), welches aus dem Gehäuse (1, 6, 11, 12) herausgeführt ist;
c) es ist eine Zugentlastung für das Kabel vorgesehen;
gekennzeichnet durch die folgenden Merkmale:
d) Die Zugentlastung weist zwei gegeneinander bewegbare Teile (11, 12 und 14) zum Einklemmen des Kabels (2, 22) auf;
e) die beiden Teile (11, 12 und 14) der Zugentlastung stützen sich unter Vorspannung im wesentlichen senkrecht zu der Wand des topfförmigen Gehäuseteiles (1, 6) an der Wand des topfförmigen Gehäuseteiles (1, 6) ab;
f) von wenigstens dem einen der beiden Teile (11, 12 und 14) der Zugentlastung wird das Verschlußteil (11, 12) für das topfförmige Gehäuseteil (1, 6) gebildet.

2. Kabeldurchführung nach Anspruch 1, dadurch gekennzeichnet, daß das Kabel (2, 22) radial aus dem Gehäuse herausgeführt ist.

3. Kabeldurchführung nach Anspruch 1, dadurch gekennzeichnet, daß das Kabel (2, 22) in Richtung der Längsachse des Gehäuses (1, 6, 11, 12) verlaufend aus dem Gehäuse herausgeführt ist.

4. Kabeldurchführung nach wenigstens einem der vorhergehenden Ansprüche, gekennzeichnet durch die folgenden Merkmale:
a) Das als Verschlußteil (11, 12) dienende eine Teil der Zugentlastung ist so ausgebildet, daß es wenigstens mit einem Teilbereich (11) seiner axialen Erstreckung in das topfförmige Gehäuseteil (1, 6) einführbar ist;
b) zum Herausführen des Kabels (2, 22) aus dem Gehäuse (1, 6, 11) ist im Verschlußteil (11, 12) ein Durchlaß (9) für das Kabel (2, 22) vorgesehen;
c) das Verschlußteil (11, 12) weist eine Ausnehmung (13) auf, die im wesentlichen quer zur Längsachse des Durchlasses (9) für das Kabel (2, 22) verläuft und sich im wesentlichen von der äußeren Mantelfläche des Verschlußteiles (11, 12) bis zum Durchlaß (9) hin erstreckt und in diesem mündet;
d) das andere Teil (14) der Zugentlastung dient als Klemmstück und ist in Richtung auf das Kabel (2, 22) zu in die Ausnehmung (13) des Verschlußteiles (11, 12) eingeschoben;
e) das Klemmstück (14) und die Ausnehmung (13) sind so ausgebildet, daß das Klemmstück (14) von wenigstens einem Teilbereich der die Ausnehmung (13) begrenzenden Wandung im Verschlußteil (11, 12) geführt wird;
f) das Klemmstück (14) ist in Richtung seiner sich auf das Kabel (2, 22) zu erstreckende Längsachse so bemessen, daß es sich nach dem Einsetzen des Verschlußteiles (11, 12) in das Gehäuse (1, 6) mit seinem dem Kabel (2, 22) abgewandten Ende an der Innenwand des topfförmigen Gehäuseteiles (1, 6) abstützt und mit seiner dem Kabel (2, 22) zugewandten Seite unter elastischer Verformung des Kabels (2, 22) dieses gegen einen Teilbereich der den Durchlaß (13) für das Kabel (2, 22) begrenzenden Wandung oder gegen ein mit dieser Wandung verbundenes Teil drückt;
g) die Ausnehmung (13) zur Aufnahme des Klemmstückes (14) ist in Richtung der Längsachse des Verschlußteiles (11, 12) gesehen so angeordnet, daß sie nach dem Einführen des Verschlußteiles (11, 12) in das topfförmige Gehäuseteil (1, 6) in dem von diesem Gehäuseteil (1, 6) umgebenen Bereich des Verschlußteiles (11, 12) liegt;
h) das Klemmstück (14), die Ausnehmung (13) zur Aufnahme des Klemmstückes (14) sowie ein Teilbereich der den Durchlaß (9) für das Kabel (2, 22) begrenzenden Wand des Verschlußteiles (11, 12) bilden die Zugentlastung (11, 12, 14) für das Kabel (2, 22).

5. Kabeldurchführung nach wenigstens einem der vorhergehenden Ansprüche, gekennzeichnet durch die folgenden Merkmale:
a) Das Verschlußteil (11, 12) ist auf seiner dem Innenraum des topfförmigen Gehäuseteiles (1, 6) zugewandten Seite mit einem Träger (26) für wenigstens eine Dichtungseinrichtung zur Abdichtung des Innenraumes des topfförmigen Gehäuseteiles (1, 6) gegenüber dem Durchlaß (9) für das Kabel (2, 22) sowie gegenüber der Ausnehmung (13) für das Klemmstück (14) verbunden;
b) die Dichtungseinrichtung ist so ausgebildet und so angeordnet, daß sie einerseits dichtend an der Ader (2) des Kabels (2, 22) und andererseits dichtend an dem Träger (26) oder/und der Innenwand des topfförmigen Gehäuseteiles (1, 6) anliegt.

6. Kabeldurchführung nach wenigstens einem der vorhergehenden Ansprüche, dadurch gekennzeichnet, daß das Verschlußteil (11, 12) einen Vorsprung (19) mit einem in Richtung der Längsachse des Vorsprunges (19) verlaufenden weiteren Durchlaß (20) für das Kabel (2, 22) aufweist, der an den im Verschlußteil (11, 12) angeordneten Durchlaß (9) anschließt.

7. Kabeldurchführung nach wenigstens einem der vorhergehenden Ansprüche, gekennzeichnet durch die folgenden Merkmale:
a) Der im Verschlußteil (11, 12) angeordnete Durchlaß (9) für das Kabel (2, 22) weist eine als Anschlag für die Stirnfläche eines das Kabel (2, 22) umgebenden Mantels (22) ausgebildete Abstufung (10) auf;
b) der Anschlag (10) ist auf der Seite des Durchlasses (9) angeordnet, der dem aus dem Verschlußteil (11, 12) herausführenden freien Ende des Durchlasses (9) gegenüberliegt.

8. Kabeldurchführung nach wenigstens einem der vorhergehenden Ansprüche, gekennzeichnet durch die folgenden Merkmale:
a) Auf der dem Anschlag (10) gegenüberliegenden Seite ist in der den Durchlaß (9) begrenzenden Wand ein sich auf den Mantel (22) des Kabels (2, 22) zu erstreckender umlaufender Vorsprung (17) vorgesehen;
b) der umlaufende Vorsprung (17) ist so ausgebildet, daß er ein Einführen des Kabels (2, 22) in den Durchlaß (9) in Richtung auf den Anschlag (10) zu erlaubt, eine Bewegung des Kabels (2, 22) in Richtung vom Anschlag (10) weg jedoch verhindert.

9. Kabeldurchführung nach wenigstens einem der vorhergehenden Ansprüche, dadurch gekennzeichnet, daß das Klemmstück (14) auf seiner dem Kabel (2, 22) zugewandten Seite wenigstens einen sich auf das Kabel (2, 22) zu erstreckenden Vorsprung (33) aufweist.

10. Kabeldurchführung nach wenigstens einem der vorhergehenden Ansprüche, dadurch gekennzeichnet, daß die den Durchlaß (9) für das Kabel (2, 22) begrenzende Wand im Verschlußteil (11, 12) eine Vertiefung (31) aufweist, die auf der der Ausnehmung (13) für das Klemmstück (14) gegenüberliegenden Seite des Durchlasses (9) gelegen ist.

11. Kabeldurchführung nach wenigstens einem der vorhergehenden Ansprüche, gekennzeichnet durch die folgenden Merkmale:
a) In der Wand des topfförmigen Gehäuseteiles (1, 6) ist ein in Richtung der Längsachse des topfförmigen Gehäuseteiles (1, 6) verlaufender Schlitz (23) angeordnet;
b) der Schlitz (23) erstreckt sich über den überwiegenden Teil der axialen Erstreckung des Verschlußteiles (11, 12) und ist zu dem zum Verschlußteil (11, 12) hinweisenden Rand des topfförmigen Gehäuseteiles (1, 6) hin offen;
c) der Schlitz (23) dient zur Aufnahme des am Verschlußteil (11, 12) angeordneten Vorsprunges (19) und als Verdrehsicherung für das Verschlußteil (11, 12).

12. Kabeldurchführung nach wenigstens einem der vorhergehenden Ansprüche, gekennzeichnet durch die folgenden Merkmale:
a) der Träger (26) für die Dichtungseinrichtung (4, 27) besteht aus einem Vorsprung des Verschlußteiles (11, 12);
b) der Vorsprung ist auf der dem Innenraum des topfförmigen Gehäuseteiles (1, 6) zugewandten Seite des Verschlußteiles (11, 12) angeordnet und erstreckt sich auf den Innenraum des topfförmigen Gehäuseteiles (1, 6) zu.

13. Kabeldurchführung nach Anspruch 12, dadurch gekennzeichnet, daß der Vorsprung als ein ringförmiger Körper ausgebildet ist.

14. Kabeldurchführung nach wenigstens einem der vorhergehenden Ansprüche, dadurch gekennzeichnet, daß der Träger für die Dichtungseinrichtung als ein separates selbständiges Teil ausgebildet ist, welches sich an einem Teil des topfförmigen Gehäuseteiles (1, 6) abstützt.

15. Kabeldurchführung nach wenigstens einem der vorhergehenden Ansprüche, gekennzeichnet durch die folgenden Merkmale:
a) Die Dichtungsanordnung setzt sich aus einem ersten Dichtelement (4) und einem zweiten Dichtelement (27) zusammen;
b) das erste Dichtelement (4) ist als ein scheibenförmiger Körper ausgebildet und das zweite Dichtelement (27) ist als ein ringförmiger Körper ausgebildet;
c) das erste Dichtelement (4) ist in dem von dem Vorsprung (26) begrenzten Raum angeordnet und liegt mit seiner Umfangsfläche oder mit an der Umfangsfläche angeordneten umlaufenden Vorsprüngen (5) dichtend an der Wand des Vorsprunges (26) an;
d) das erste Dichtelement (4) weist wenigstens einen Durchlaß (18) für die Ader (2) bzw. die Adern (2) des Kabels (2, 22) auf, wobei der Durchlaß (18) bzw. die Durchlässe so ausgebildet und so angeordnet ist bzw. sind, daß die den Durchlaß (18) bzw. die Durchlässe begrenzende Wandung bzw. Wandungen dichtend an der Ader (2) bzw. Adern des Kabels (2, 22) anliegen;
e) das zweite Dichtelement (27) ist auf oder in der äußeren Mantelfläche des Vorsprungs (26) gelagert und liegt mit seiner Innenseite dichtend an der Mantelfläche oder in einer in der Mantelfläche angeordneten Nut (28) des Vorsprungs (26) und mit seiner Außenseite dichtend an der Innenseite des Gehäuses (1, 6) an.

16. Kabeldurchführung nach wenigstens einem der vorhergehenden Ansprüche, gekennzeichnet durch die folgenden Merkmale:
a) In der äußeren Mantelfläche des Verschlußteiles (11, 12) ist wenigstens eine Vertiefung (34) vorgesehen;
b) die Wandung des Gehäuses (1, 6) weist einen sich auf die äußere Mantelfläche des Verschlußteiles (11, 12) zu erstreckenden Vorsprung (35) auf, welcher sich in die Vertiefung (34) des Verschlußteiles (11, 12) hineinerstreckt.

17. Kabeldurchführung nach Anspruch 16, dadurch gekennzeichnet, daß im Bereich der Vertiefung (34) des Verschlußteiles (11, 12) ein plattenartiges Teil (32) angeordnet ist, welches in einer Ausnehmung des Verschlußteiles (11, 12) zwischen der äußeren Mantelfläche des Verschlußteiles (11, 12) und der Innenwand des Gehäuses (1, 6) gelegen ist, wobei das plattenartige Teil (32) einen Durchlaß (36) für den nasenartigen Vorsprung (35) der Wand des topfförmigen Gehäuseteiles (1, 6) aufweist.

## Claims

1. Cable feedthrough for a housing containing at least one electrical component, especially for an impulse revolution rate transmitter, comprising the following features:
a) the housing consists of a pot-shaped housing part (1, 6) and a closure part (11, 12) for closing the pot-shaped housing part (1, 6);
b) an electrical cable (2, 22) which is led out of the housing (1, 6, 11, 12) serves to connect the electrical component located inside the housing (1, 6, 11, 12) with an electrical device located outside the housing (1, 6, 11, 12);
c) a strain relief for the cable is provided;
characterised by the following features:
d) the strain relief has two parts (11, 12 and 14) which are movable towards each other for gripping the cable (2, 22);
e) the two parts (11, 12 and 14) of the strain relief are supported under bias substantially perpendicular to the wall of the pot-shaped housing part (1, 6) and by the wall of the pot-shaped housing part (1, 6);
f) the closure part (11, 12) for the pot-shaped housing part (1, 6) is formed by at least one of the two parts (11, 12 and 14) of the strain relief.

2. Cable feedthrough according to claim 1, characterised in that the cable (2, 22) is led out of the housing radially.

3. Cable feedthrough according to claim 1, characterised in that the cable (2, 22) is led out of the housing in the direction of the longitudinal axis of the housing (1, 6, 11, 12).

4. Cable feedthrough according to at least one of the preceding claims, characterised by the following features:
a) the one part of the strain relief which serves as the closure part (11, 12) is so constructed that it can be inserted into the pot-shaped housing part (1, 6) by at least a portion (11) of its axial length;
b) in order to lead the cable (2, 22) out of the housing (1, 6, 11) an opening (9) for the cable (2, 22) is provided in the closure part (11, 12);
c) the closure part (11, 12) has a recess (13) which extends substantially transversely to the longitudinal axis of the opening (9) for the cable (2, 22) and extends substantially from the outer circumferential surface of the closure part (11, 12) to the opening (9) and leads into the latter;
d) the other part (14) of the strain relief serves as a clamping piece and is pushed into the recess (13) in the closure part (11, 12) in the direction towards the cable (2, 22);
e) the clamping piece (14) and the recess (13) are so constructed that the clamping piece (14) is guided in the closure part (11, 12) by at least a portion of the wall defining the recess (13);
f) the clamping piece (14) is so dimensioned in the direction of its longitudinal axis extending towards the cable (2, 22) that, after the closure part (11, 12) has been inserted into the housing (1, 6), the clamping piece is supported by its end remote from the cable (2, 22) on the inner wall of the pot-shaped housing part (1, 6) and, by its end towards the cable (2, 22), urges the cable (2, 22), with resilient deformation thereof, against a portion of the wall defining the opening (13) for the cable (2, 22) or against a part joined to that wall;
g) viewed in the direction of the longitudinal axis of the closure part (11, 12), the recess (13) for receiving the clamping piece (14) is so arranged that, after the closure part (11, 12) has been inserted into the pot-shaped housing part (1, 6), the recess lies in that region of the closure part (11, 12) which is surrounded by that housing part (1, 6);
h) the clamping piece (14), the recess (13) for receiving the clamping piece (14) and a portion of the wall of the closure part (11, 12) defining the opening (9) for the cable (2, 22) form the strain relief (11, 12, 14) for the cable (2, 22).

5. Cable feedthrough according to at least one of the preceding claims, characterised by the following features:
a) the closure part (11, 12) is connected at its side towards the interior of the pot-shaped housing part (1, 6) with a carrier (26) for at least one sealing device for sealing the interior of the pot-shaped housing part (1, 6) with respect to the opening (9) for the cable (2, 22) and with respect to the recess (13) for the clamping piece (14);
b) the sealing device is so constructed and so arranged that it rests, on the one hand, against the conductor (2) of the cable (2, 22) in a sealing manner and, on the other hand, against the carrier (26) and/or the inner wall of the pot-shaped housing part (1, 6) in a sealing manner.

6. Cable feedthrough according to at least one of the preceding claims, characterised in that the closure part (11, 12) has a projecting part (19) with a further opening (20) for the cable (2, 22), which opening extends in the direction of the longitudinal axis of the projecting part (19) and joins with the opening (9) arranged in the closure part (11, 12).

7. Cable feedthrough according to at least one of the preceding claims, characterised by the following features:
a) the opening (9) for the cable (2, 22), which is arranged in the closure part (11, 12), has a step (10) formed as a stop for the end face of a jacket (22) which surrounds the cable (2, 22);
b) the stop (10) is arranged on that side of the opening (9) which lies opposite the free end of the opening (9) leading out of the closure part (11, 12).

8. Cable feedthrough according to at least one of the preceding claims, characterised by the following features:
a) an encircling projection (17) extending towards the jacket (22) of the cable (2, 22) is provided in the wall defining the opening (9), on the side opposite the stop (10);
b) the encircling projection (17) is so constructed that it allows the cable (2, 22) to be inserted into the opening (9) in the direction towards the stop (10) but prevents the cable (2, 22) from moving in the direction away from the stop (10).

9. Cable feedthrough according to at least one of the preceding claims, characterised in that the clamping piece (14) has, on its side towards the cable (2, 22), at least one projection (33) extending towards the cable (2, 22).

10. Cable feedthrough according to at least one of the preceding claims, characterised in that the wall defining the opening (9) for the cable (2, 22) in the closure part (11, 12) has a depression (31) located on that side of the opening (9) which lies opposite the recess (13) for the clamping piece (14).

11. Cable feedthrough according to at least one of the preceding claims, characterised by the following features:
a) a slot (23) extending in the direction of the longitudinal axis of the pot-shaped housing part (1, 6) is arranged in the wall of the pot-shaped housing part (1, 6);
b) the slot (23) extends over the majority of the axial length of the closure part (11, 12) and is open at the edge of the pot-shaped housing part (1, 6) towards the closure part (11, 12);
c) the slot (23) serves to receive the projecting part (19) arranged on the closure part (11, 12) and as an anti-rotation device for the closure part (11, 12).

12. Cable feedthrough according to at least one of the preceding claims, characterised by the following features:
a) the carrier (26) for the sealing device (4, 27) consists of a projecting part of the closure part (11, 12);
b) the projecting part is arranged on the side of the closure part (11, 12) facing the interior of the pot-shaped housing part (1, 6) and extends towards the interior of the pot-shaped housing part (1, 6).

13. Cable feedthrough according to claim 12, characterised in that the projecting part is in the form of an annular body.

14. Cable feedthrough according to at least one of the preceding claims, characterised in that the carrier for the sealing device is in the form of a separate independent part which is supported on a portion of the potshaped housing part (1, 6).

15. Cable feedthrough according to at least one of the preceding claims, characterised by the following features:
a) the sealing arrangement is composed of a first sealing element (4) and a second sealing element (27);
b) the first sealing element (4) is in the form of a disc-shaped body and the second sealing element (27) is in the form of an annular body;
c) the first sealing element (4) is arranged in the space defined by the projecting part (26) and rests by its circumferential surface, or by encircling projections (5) arranged on the circumferential surface, against the wall of the projecting part (26) in a sealing manner;
d) the first sealing element (4) has at least one opening (18) for the conductor or conductors (2) of the cable (2, 22), the opening or openings (18) being so constructed and so arranged that the wall or walls defining the opening or openings (18) rest(s) on the conductor or conductors (2) of the cable (2, 22) in a sealing manner;
e) the second sealing element (27) is mounted on or in the outer circumferential surface of the projecting part (26) and rests by its inside against the circumferential surface, or in a groove (28) arranged in the circumferential surface, of the projecting part (26) in a sealing manner and, by its outside, against the inside of the housing (1, 6) in a sealing manner.

16. Cable feedthrough according to at least one of the preceding claims, characterised by the following features:
a) at least one depression (34) is provided in the outer circumferential surface of the closure part (11, 12);
b) the wall of the housing (1, 6) has a projection (35) that extends towards the outer circumferential surface of the closure part (11, 12) and into the depression (34) in the closure part (11, 12).

17. Cable feedthrough according to claim 16, characterised in that there is arranged in the region of the depression (34) in the closure part (11, 12) a plate-like part (32) which is located in a recess in the closure part (11, 12) between the outer circumferential surface of the closure part (11, 12) and the inner wall of the housing (1, 6), the plate-like part (32) having an opening (36) for the nose-like projection (35) of the wall of the pot-shaped housing part (1, 6).

## Revendications

1. Traversée de câble pour un boîtier contenant au moins un composant électrique, notamment pour un capteur d'impulsions de comptage de tours, présentant les caractéristiques suivantes :
a) le boîtier est constitué par une partie boîtier (1, 6) aménagée en forme de pot et par une partie obturatrice (11, 12) pour fermer la partie boîtier en forme de pot (1, 6);
b) pour relier le composant électrique situé dans le boîtier (1, 6, 11, 12) à un appareil électrique situé à l'extérieur du boîtier (1, 6, 11, 12), un câble électrique (2, 22) est utilisé et sort du boîtier (1, 6, 11, 12);
c) des moyens de décharge de traction sont prévus pour le câble;
caractérisée par les caractéristiques suivantes :
d) les moyens de décharge de traction présentent deux parties mobiles l'une par rapport à l'autre (11, 12 et 14), pour le serrage-coincement du câble (2, 22);
e) les deux parties (11, 12 et 14) des moyens de décharge de traction s'appuient, sous précontrainte, sensiblement perpendiculairement à la paroi de la partie boîtier (1, 6) en forme de pot, contre la paroi de cette partie boîtier (1, 6) en forme de pot;
f) la partie obturatrice (11, 12) pour obturer la partie boîtier (1, 6) en forme de pot est constituée par au moins la première des deux parties (11, 12 et 14) des moyens de décharge de traction.

2. Traversée de câble selon revendication 1, caractérisée par le fait que le câble (2, 22) sort radialement du boîtier.

3. Traversée de câble selon revendication 1, caractérisée par le fait que le câble (2, 22) sort du boîtier en s'étendant en direction de l'axe longitudinal du boîtier (1, 6, 11, 12).

4. Traversée de câble selon au moins l'une des revendications précédentes, caractérisée par les caractéristiques suivantes :
a) la première partie des moyens de décharge de traction, servant de partie obturatrice (11, 12), est réalisée de manière à pouvoir être introduite dans la partie boîtier en forme de pot (1, 6) par au moins une région partielle (11) de son étendue axiale;
b) pour la sortie du câble (2, 22) hors du boîtier (1, 6, 11), il est prévu, dans la partie obturatrice (11, 12), un passage (9) pour le câble (2, 22);
c) la partie obturatrice (11, 12) présente un évidement (13) qui s'étend sensiblement transversalement à l'axe longitudinal du passage (9) pour le câble (2, 22) et qui s'étend sensiblement de la surface périphérique extérieure de la partie obturatrice (11, 12) jusqu'au passage (9) et débouche dans celui-ci;
d) l'autre partie (14) des moyens de décharge de traction sert de pièce de serrage et est introduite, en direction du câble (2, 22), dans l'évidement (13) de la partie obturatrice (11, 12);
e) la pièce de serrage (14) et l'évidement (13) sont réalisés de manière que la pièce de serrage (14) soit guidée dans la partie obturatrice (11, 12) par au moins une région partielle de la paroi bordant l'évidement (13);
f) la pièce de serrage (14) est dimensionnée, dans la direction de son axe longitudinal s'étendant vers le câble (2, 22), de manière qu'après l'introduction de la partie obturatrice (11, 12) dans le boîtier (1, 6), elle s'appuie, par son extrémité éloignée du câble (2, 22), contre la paroi intérieure de la partie boîtier (1, 6) en forme de pot, et, par son côté tourné vers le câble (2, 22) appuie ce câble (2, 22) en le déformant élastiquement, contre une région partielle de la paroi bordant le passage (13) pour le câble (2, 22), ou contre une pièce ou partie liée à cette paroi;
g) l'évidement (13) pour recevoir la pièce de serrage (14) est disposé, quand on le considère en direction de l'axe longitudinal de la partie obturatrice (11, 12), de manière telle qu'après l'introduction de la partie obturatrice (11, 12) dans la partie boîtier en forme de pot (1, 6), il se trouve dans la région de la partie obturatrice (11, 12) entourée par cette partie boîtier (1, 6);
h) la pièce de serrage (14), l'évidement (13) pour recevoir la pièce de serrage (14) ainsi qu'une région partielle de la paroi de la partie obturatrice (11, 12) bordant le passage (9) pour le câble (2, 22), forment les moyens de décharge de traction (11, 12, 14) pour le câble (2, 22).

5. Traversée de câble selon au moins l'une des revendications précédentes, caractérisée par les caractéristiques suivantes :
a) en son côté tourné vers le volume intérieur de la partie boîtier en forme de pot (1, 6), la partie obturatrice (11, 12) est reliée à un support (26) pour au moins un dispositif d'étanchéité, afin d'étancher le volume intérieur de la partie boîtier en forme de pot (1, 6) à l'égard du passage (9) pour le câble (2, 22), ainsi qu'à l'égard de l'évidement (13) pour la pièce de serrage (14);
b) le dispositif d'étanchéité est réalisé et disposé de manière à s'appliquer avec étanchéité d'un côté contre le brin (2) du câble (2, 22) et de l'autre côté, avec étanchéité, contre le support (26) et/ou contre la paroi intérieure de la partie boîtier en forme de pot (1, 6).

6. Traversée de câble selon au moins l'une des revendications précédentes, caractérisée par le fait que la partie obturatrice (11, 12) présente un saillant (19) avec, s'étendant en direction de l'axe longitudinal du saillant (19), un autre passage (20) pour le câble (2, 22), lequel passage se raccorde au passage (9) aménagé dans la partie obturatrice (11, 12).

7. Traversée de câble selon au moins l'une des revendications précédentes, caractérisée par les caractéristiques suivantes :
a) le passage (9) pour le câble (2, 22), ce passage étant aménagé dans la partie obturatrice (11, 12), présente une partie en gradin (10) réalisée en tant que butée pour la surface en bout d'une gaine (22) entourant le câble (2, 22);
b) la butée (10) est disposée du côté du passage (9) qui est en vis-à-vis de l'extrémité libre du passage (9) sortant de la partie obturatrice (11, 12).

8. Traversée de câble selon au moins l'une des revendications précédentes, caractérisée par les caractéristiques suivantes :
a) du côté à l'opposé de la butée (10), il est prévu, dans la paroi bordant le passage (9), un saillant (17) entourant qui s'étend vers la gaine (22) du câble (2, 22);
b) le saillant entourant (17) est réalisé de manière à permettre une introduction du câble (2, 22) dans le passage (9), en direction de la butée (10), mais de manière à empêcher tout mouvement du câble (2, 22) dans le sens de son éloignement de la butée (10).

9. Traversée de câble selon au moins l'une des revendications précédentes, caractérisée par le fait qu'en son côté tourné vers le câble (2, 22), la pièce de serrage (14) présente au moins un saillant (33) s'étendant en direction du câble (2, 22).

10. Traversée de câble selon au moins l'une des revendications précédentes, caractérisée par le fait que la paroi qui, dans la partie obturatrice (11, 12), borde la passage (9) pour le câble (2, 22), présente une dépression (31) qui est située du côté du passage (9) opposé à l'évidement (13) pour la pièce de serrage (14).

11. Traversée de câble selon au moins l'une des revendications précédentes, caractérisée par les caractéristiques suivantes :
a) dans la paroi de la partie boîtier en forme de pot (1, 6) est disposée une fente (23) s'étendant en direction de l'axe longitudinal de la partie boîtier en forme de pot (1, 6);
b) la fente (23) s'étend sur la majeure partie de l'étendue axiale de la partie obturatrice (11, 12) et est ouverte en direction du bord de la partie boîtier en forme de pot (1, 6) en regard de la partie obturatrice (11, 12);
c) la fente (23) sert à recevoir le saillant (19) disposé sur la partie obturatrice (11, 12) et sert d'arrêt en rotation pour la partie obturatrice (11, 12).

12. Traversée de câble selon au moins l'une des revendications précédentes, caractérisée par les caractéristiques suivantes :
a) le support (26) pour le dispositif d'étanchéité (4, 27) est constitué par un relief ou saillant de la partie obturatrice (11, 12);
b) le saillant est disposé sur le côté de la partie obturatrice (11, 12) tourné vers le volume intérieur de la partie boîtier en forme de pot (1, 6), et s'étend en direction du volume intérieur de la partie boîtier en forme de pot (1, 6).

13. Traversée de câble selon revendication 12, caractérisée par le fait que le relief est réalisé sous la forme d'un corps annulaire.

14. Traversée de câble selon au moins l'une des revendications précédentes, caractérisée par le fait que le support pour le dispositif d'étanchéité est réalisé sous la forme d'une pièce séparée, autonome, qui prend appui contre une partie de la partie boîtier en forme de pot (1, 6).

15. Traversée de câble selon au moins l'une des revendications précédentes, caractérisée par les caractéristiques suivantes :
a) le dispositif d'étanchéité se compose d'un premier élément d'étanchéité (4) et d'un deuxième élément d'étanchéité (27);
b) le premier élément d'étanchéité (4) est réalisé sous la forme d'un corps en forme de disque ou tranche, et le deuxième élément d'étanchéité (27) est réalisé sous la forme d'un corps annulaire;
c) le premier élément d'étanchéité (4) est disposé dans l'espace bordé par le saillant (26) et s'applique, par sa surface périphérique, ou par des reliefs entourants (5) agencés sur sa surface périphérique, de manière étanche contre la paroi du saillant (26);
d) le premier élément d'étanchéité (4) présente au moins un passage (18) pour le ou les brin(s) (2) du câble (2, 22), ce ou ces passage(s) étant réalisé(s) et agencé(s), de manière que la ou les paroi(s) bordant le ou les passage(s) (18) s'appliquent avec étanchéité contre le ou les brin(s) du câble (2, 22);
e) le deuxième élément d'étanchéité (27) est monté sur ou dans la surface périphérique extérieure du relief (26) et s'applique, par son côté intérieur, avec étanchéité, contre la surface périphérique ou dans une rainure (28) aménagée dans la surface périphérique du saillant (26) et s'applique, par son côté extérieur, avec étanchéité, contre le côté intérieur du boîtier (1, 6).

16. Traversée de câble selon au moins l'une des revendications précédentes, caractérisée par les caractéristiques suivantes :
a) au moins une dépression (34) est prévue dans la surface périphérique extérieure de la partie obturatrice (11, 12);
b) la paroi du boîtier (1, 6) présente un saillant ou relief (35) s'étendant en direction de la surface périphérique extérieure de la partie obturatrice (11, 12), lequel pénètre dans la dépression (34) de la partie obturatrice (11, 12).

17. Traversée de câble selon revendication 16, caractérisée par le fait que, dans la région de la dépression (34) de la partie obturatrice (11, 12) est agencée une pièce du genre plaque (32) qui est située dans un évidement de la partie obturatrice (11, 12), entre la surface périphérique extérieure de la partie obturatrice (11, 12) et la paroi intérieure du boîtier (1, 6), ladite partie du genre plaque (32) présentant un passage (36) pour le saillant (35) du genre nez que comporte la paroi de la partie boîtier en forme de pot (1, 6).
